# EUROPÄISCHE PATENTANMELDUNG

(11) **EP 3 751 129 A1**
(43) Veröffentlichungstag der Anmeldung: **16.12.2020**
(21) Anmeldenummer: 20180063.8
(22) Anmeldetag: 15.06.2020
(51) Int. Cl.: F02N 11/00, F02N 15/00, F02N 15/04, H02K 7/116, H02K 1/18, H02K 23/04

(54) **STARTERMOTOR FÜR EINE MIT EINEM GETRIEBE AUSGESTATTETE STARTVORRICHTUNG ZUM STARTEN EINER BRENNKRAFTMASCHINE**

(30) Priorität: 13.06.2019 DE 102019116094
(71) Anmelder: SEG Automotive Germany GmbH, 70499 Stuttgart (DE)
(72) Erfinder: WAGNER, Carlos, 71254 Ditzingen (DE); RAIZER, Breno, 13085-760 Campinas (BR)
(74) Vertreter: Steinbauer, Florian

(57) **Zusammenfassung**

Die Erfindung betrifft einen Startermotor (100) für eine Startvorrichtung zum Starten einer Brennkraftmaschine mit einer elektrischen Maschine (110) mit einem Motorgehäuse (101) und einem Getriebe (120), wobei in dem Motorgehäuse (101) wenigstens ein Fixierelement (130) zum Fixieren von wenigstens einem Magnetelement (111) der elektrischen Maschine (110) vorgesehen ist, wobei das wenigstens eine Fixierelement (130) ferner das Getriebe (120) axial fixiert.

## Beschreibung

Die vorliegende Erfindung betrifft einen Startermotor für eine Startvorrichtung zum Starten einer Brennkraftmaschine sowie eine Startvorrichtung zum Starten einer Brennkraftmaschine.

### Stand der Technik

Eine Startvorrichtung für eine Brennkraftmaschine weist zumeist ein Starterritzel auf, welches zwischen einer axial zurückgezogenen Außerfunktionsposition und einer vorgerückten Eingriffsposition, in der das Starterritzel in einen Zahnkranz der Brennkraftmaschine eingreift, verstellbar ist. Mithilfe eines Startermotors kann eine drehende Antriebsbewegung auf das Starterritzel erzeugt werden, so dass eine Kurbelwelle der Brennkraftmaschine in Drehbewegung versetzt werden kann. Ein derartiger Startermotor kann zumeist eine elektrische Maschine wie einen Gleichstrommotor umfassen, welchem ein Getriebe etwa in Form eines Planetengetriebes nachgeschaltet ist, über welches der Startermotor mit einer Welle gekoppelt ist, auf welcher das Starterritzel angeordnet ist.

Die elektrische Maschine und das Getriebe sind dabei oftmals in einem gemeinsamen Gehäuse angeordnet. Als axiale Anschläge für das Getriebe in dem Gehäuse sind oftmals Vorsprünge an der Gehäuseinnenwand vorgesehen, an welchen sich das Getriebe abstützen kann. Derartige Vorsprünge sind jedoch meist zu klein und gewährleisten nicht ausreichend Kontaktfläche für eine zuverlässige axiale Fixierung, da das zumeist aus Kunststoff gefertigte Getriebegehäuse sonst bei zu großer Belastung beschädigt werden könnte. Daher sind zumeist noch zusätzliche metallische Halteelemente zwischen dem Getriebe und den Vorsprüngen vorgesehen, welche beispielsweise als metallische Federringe ausgebildet sein können. Dies sorgt gleichzeitig für einen nötigen Toleranzausgleich.

### Offenbarung der Erfindung

Erfindungsgemäß werden ein Startermotor für eine Startvorrichtung zum Starten einer Brennkraftmaschine sowie eine Startvorrichtung zum Starten einer Brennkraftmaschine mit den Merkmalen der unabhängigen Patentansprüche vorgeschlagen. Vorteilhafte Ausgestaltungen sind Gegenstand der Unteransprüche sowie der nachfolgenden Beschreibung.

Der Startermotor weist eine elektrische Maschine mit einem Motorgehäuse sowie ein Getriebe auf. Wenigstens ein Fixierelement ist in dem Motorgehäuse zum Fixieren wenigstens eines Magnetelements der elektrischen Maschine vorgesehen, insbesondere zum Fixieren in axialer Richtung sowie in Umfangsrichtung.

Bei den Magnetelementen kann es sich insbesondere um Permanentmagnete handeln. Die elektrische Maschine kann beispielsweise als ein permanenterregter Gleichstrommotor ausgebildet sein. Das Getriebe kann beispielsweise als ein Planetengetriebe ausgebildet sein.

Das wenigstens eine Fixierelement fixiert neben dem wenigstens einen Magnetelement ferner das Getriebe axial in wenigstens eine Richtung bzw. stellt einen Anschlag in wenigstens eine axiale Richtung dar, vorzugsweise in dieselbe Richtung. Die vorliegende Erfindung schlägt somit vor, Magnethalter, welche zum Fixieren der Magnete des Elektromotors verwendet werden, auch als Anschläge zur axialen Fixierung des Getriebes zu verwenden. Zusätzliche, separate Halteelemente zum Fixieren des Getriebes können somit eingespart werden, da deren Funktion auf andere Elemente in Form der Magnethalter übertragen werden.

Somit kann eine zuverlässige Fixierung sowohl der Magnetelemente als auch des Getriebes mit Hilfe desselben Bauteils ermöglicht werden. Die Anzahl an zu verbauenden Elementen für den Startermotor kann verringert werden. Der Startermotor kann einfacher und gewünschtenfalls platzsparender gebaut werden. Kosten können somit reduziert werden.

Das Getriebe umfasst zweckmäßigerweise ein separates Getriebegehäuse, innerhalb welchem die einzelnen Elemente des Getriebes angeordnet sind. Insbesondere kann das wenigstens eine Fixierelement eine Kraft auf dieses Getriebegehäuse ausüben und das Getriebegehäuse somit axial fixieren. Das Getriebe mit oder ohne Getriebegehäuse ist insbesondere auch in dem Motorgehäuse angeordnet.

Gemäß einer vorteilhaften Ausgestaltung ist das wenigstens eine Fixierelement an dem Motorgehäuse des Startermotors angeordnet. Vorteilhafterweise fixiert das wenigstens eine Fixierelement das wenigstens eine Magnetelement relativ zu dem Motorgehäuse, insbesondere in axialer Richtung und in Umfangsrichtung. Das wenigstens eine Fixierelement ist zweckmäßigerweise an einer Gehäusewandung angeordnet und dort befestigt.

Vorzugsweise übt das wenigstens eine Fixierelement eine axiale Kraft auf das wenigstens eine Magnetelement aus und ferner eine axiale Kraft auf das Getriebe, vorzugsweise in dieselbe Richtung, z.B. in Richtung des Lagerschilds oder Starterritzels. Durch diese ausgeübte Kraft können das wenigstens eine Magnetelement und das Getriebe jeweils zweckmäßigerweise axial fixiert werden. Das Magnetelement kann durch diese axiale Kraft insbesondere gegen ein Begrenzungselement gedrückt werden, beispielsweise gegen einen Gehäusevorsprung, so dass das Magnetelement zwischen diesem Begrenzungselement und dem Fixierelement eingeklemmt ist und in axialer Position gehalten wird. Auch das Getriebe kann durch die axiale Kraft zweckmäßigerweise gegen ein Begrenzungselement gedrückt werden, wobei es sich hier beispielsweise ebenfalls um einen Gehäusevorsprung handeln kann oder zweckmäßigerweise um eine Abdeckung des Gehäuses des Startermotors, etwa ein Lagerschild bzw. Lagerdeckel.

Gemäß einer ersten bevorzugten Ausgestaltung weist das wenigstens eine Fixierelement einen ersten Abschnitt auf sowie einen sich an den ersten Abschnitt anschließenden zweiten Abschnitt und einen sich an den ersten Abschnitt anschließenden dritten Abschnitt.

Der erste Abschnitt verläuft vorzugsweise zwischen zwei in Umfangsrichtung betrachtet benachbarten Magnetelementen zumindest im Wesentlichen in axialer Richtung. Zweckmäßigerweise ist jeweils zwischen zwei benachbarten Magnetelementen ein derartiges Fixierelement vorgesehen. Ein Magnetelement wird insbesondere jeweils von zwei Fixierelementen fixiert, zwischen welchen das jeweilige Magnetelement angeordnet ist.

Der zweite Abschnitt verläuft bevorzugt auf einer dem Getriebe abgewandten Seite der zwei benachbarten Magnetelemente und übt dort eine axiale Kraft auf die zwei benachbarten Magnetelemente aus. Beispielsweise können die Magnetelemente somit jeweils gegen einen Gehäusevorsprung gedrückt werden, welcher auf einer dem Getriebe zugewandten Seite der Magnetelemente vorgesehen ist.

Der dritte Abschnitt verläuft vorzugsweise von der dem Getriebe zugewandten Seite der zwei benachbarten Magnetelemente bis zu einer den Magnetelementen zugewandten Seite des Getriebes und übt dort eine axiale Kraft auf das Getriebe aus. Insbesondere kann ein herkömmlicher Magnethalter, der nur zum Fixieren von Magnetelementen vorgesehen ist, durch diesen dritten Abschnitt verlängert werden, um ferner auch eine Kraft auf das Getriebe auszuüben und dieses axial fixieren zu können.

Vorteilhafterweise ist der erste Abschnitt als ein Trägerabschnitt ausgebildet, mittels welchem das wenigstens eine Fixierelement an einem Gehäuse des Startermotors befestigt ist. Der zweite Abschnitt und der dritte Abschnitt sind vorzugsweise jeweils als ein sich an den ersten Abschnitt anschließender gebogener Federabschnitt ausgebildet. Durch eine entsprechend Federwirkung können der zweite und der dritte Abschnitt zweckmäßigerweise jeweils die axiale Kraft auf die jeweiligen Magnetelemente und das Getriebe ausüben und Toleranzketten ausgleichen.

Gemäß einer zweiten bevorzugten Ausgestaltung übt das Fixierelement im Gegensatz zu der obig erläuterten ersten Ausgestaltung keine Kraft auf die dem Getriebe abgewandte Seite der zwei benachbarten Magnetelemente aus. Das wenigstens eine Fixierelement weist in diesem Fall analog zu obiger erster Alternative bevorzugt ebenfalls einen ersten Abschnitt auf, der zwischen zwei in Umfangsrichtung betrachtet benachbarten Magnetelementen zumindest im Wesentlichen in axialer Richtung verläuft. Im Gegensatz zu obiger Ausgestaltung weist das das wenigstens eine Fixierelement gemäß dieser zweiten Alternative vorzugsweise einen sich an den ersten Abschnitt anschließenden zweiten Abschnitt auf, der in einem Bereich zwischen der dem Getriebe zugewandten Seite der zwei benachbarten Magnetelemente und der den Magnetelementen zugewandten Seite des Getriebes verläuft. In diesem Bereich übt der zweite Abschnitt vorteilhafterweise eine axiale Kraft auf das Getriebe und eine axiale Kraft auf die zwei benachbarten Magnetelemente aus. Durch die auf die Magnetelemente ausgeübte Kraft werden diese zweckmäßigerweise gegen einen Gehäusevorsprung gedrückt, welcher in diesem Fall auf der dem Getriebe abgewandten Seite der Magnetelemente vorgesehen ist. Ein herkömmlicher Magnethalter, dessen zweiter Abschnitt in diesem Fall nur eine Kraft auf die Magnetelemente ausübt, wird daher zweckmäßigerweise derart umkonstruiert, dass der zweite Abschnitt ferner auch eine Kraft auf das Getriebe ausüben kann.

Bevorzugt verläuft der zweite Abschnitt zunächst von der dem Getriebe zugewandten Seite der zwei benachbarten Magnetelemente bis zu der den Magnetelementen zugewandten Seite des Getriebes und übt dort die axiale Kraft auf das Getriebe aus. Von der den Magnetelementen zugewandten Seite des Getriebes verläuft der zweite Abschnitt bevorzugt bis zu der dem Getriebe zugewandten Seite der zwei benachbarten Magnetelemente und übt dort die axiale Kraft auf die zwei benachbarten Magnetelemente aus. Insbesondere ist der zweite Abschnitt zu diesem Zweck entsprechend verformt bzw. gebogen.

Der erste Abschnitt ist in diesem Fall vorzugsweise ebenfalls als ein Trägerabschnitt ausgebildet, mittels welchem das wenigstens eine Fixierelement an dem Gehäuse des Startermotors befestigt. Der zweite Abschnitt ist bevorzugt als ein sich an den ersten Abschnitt anschließender gebogener Federabschnitt ausgebildet. Durch die entsprechend Federwirkung kann zweckmäßigerweise axiale Kraft sowohl auf die Magnetelemente als auch auf das Getriebe ausgeübt werden.

Gemäß einer dritten bevorzugten Ausgestaltung weist das wenigstens eine Fixierelement vorteilhafterweise ein erstes Element auf, das an einer dem Getriebe abgewandten Seite des wenigstens einen Magnetelements verläuft, und ein zweites Element, das an einer dem Getriebe zugewandten Seite des wenigstens einen Magnetelements verläuft. Insbesondere üben dabei sowohl das erste Element als auch das zweite Element jeweils eine axiale Kraft auf das wenigstens eine Magnetelement aus. Das wenigstens eine Magnetelement kann zweckmäßigerweise zwischen diesen beiden Elementen eingeklemmt bzw. eingespannt sein. Insbesondere umfasst das Fixierelement in diesem Fall zweckmäßigerweise keinen zwischen den Magnetelementen angeordneten Abschnitt.

Vorteilhafterweise erstreckt sich von dem zweiten Element wenigstens ein Verlängerungsabschnitt bis zu einer den Magnetelementen zugewandten Seite des Getriebes und übt dort eine axiale Kraft auf das Getriebe aus. Ein herkömmlicher Magnethalter, welcher nur dieses erste und zweite Element aufweist, kann somit durch diesen Verlängerungsabschnitt ergänzt werden, um gleichzeitig eine axiale Kraft auf das Getriebe und die Magnetelemente ausüben zu können.

Vorteilhafterweise sind das erste Element und das zweite Element jeweils als gebogener Federabschnitt und/oder ringförmig oder zumindest im Wesentlichen ringförmig ausgebildet. Somit sind zweckmäßigerweise nicht für unterschiedliche Magnetelemente jeweils einzelne Fixierelemente vorgesehen, sondern alle Magnetelemente werden insbesondere gemeinsam durch die gebogene oder ringförmig ausgebildeten Fixierelemente fixiert.

Vorzugsweise wird das Getriebe durch das wenigstens eine Fixierelement gegen ein Begrenzungselement gedrückt, insbesondere gegen ein Lagerschild des Startermotors. Das Getriebe kann somit in fixer axialer Position zwischen diesem Begrenzungselement und dem wenigstens eine Fixierelement gehalten werden.

Bevorzugt wird das Getriebe ferner durch das wenigstens eine Fixierelement zusammengehalten. Mittels des wenigstens einen Fixierelements kann das Getriebe somit nicht nur in fixer axialer Position relativ zu dem Gehäuse des Startermotors gehalten werden, sondern es können ferner die einzelnen Elemente des Getriebes relativ zueinander fixiert werden.

Eine erfindungsgemäße Startvorrichtung zum Starten einer Brennkraftmaschine weist eine bevorzugte Ausgestaltung eines erfindungsgemäßen Startermotors auf. Es versteht sich, dass die Startvorrichtung ferner noch weitere Komponenten aufweisen kann, beispielsweise ein Starterritzel, ein Starterrelais zum axialen Verschieben des Starterritzels sowie ein Schaltrelais zum Einschalten der elektrischen Maschine.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch eine bevorzugte Ausgestaltung einer erfindungsgemäßen Startvorrichtung zum Starten einer Brennkraftmaschine.
- Figur 2: zeigt schematisch einen Ausschnitt eines herkömmlichen Startermotors zum Starten einer Brennkraftmaschine nach dem Stand der Technik.
- Figur 3 bis 5: zeigt jeweils schematisch und ausschnittsweise eine bevorzugte Ausgestaltung eines erfindungsgemäßen Startermotors zum Starten einer Brennkraftmaschine.

### Ausführungsform(en) der Erfindung

In den Figuren bezeichnen gleiche Bezugszeichen gleiche oder baugleiche Elemente.

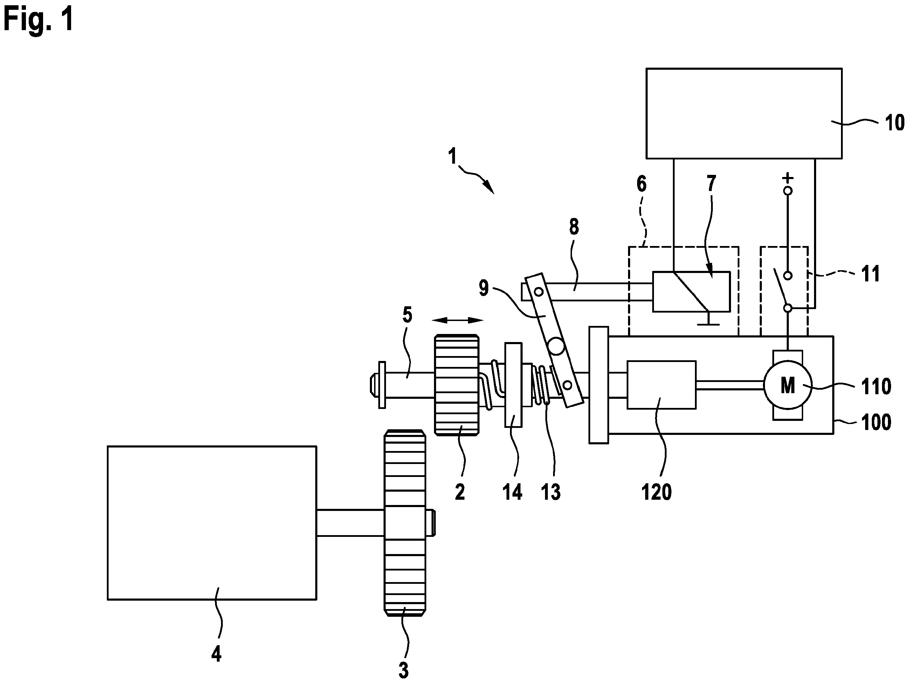

In Figur 1 ist eine bevorzugte Ausgestaltung einer erfindungsgemäßen Startvorrichtung für eine Brennkraftmaschine schematisch dargestellt und mit 1 bezeichnet.

Die Startvorrichtung 1 weist ein Starterritzel 2 auf, das zum Starten der Brennkraftmaschine 4 in Eingriff mit einem Zahnkranz 3 der Brennkraftmaschine gebracht wird. Das Starterritzel 2 ist auf einer Welle 5 wie mit dem Doppelpfeil gekennzeichnet axial verschiebbar gelagert, wobei das Starterritzel 2 drehfest mit der Welle 5 gekoppelt ist. Das Starterritzel 2 wird zwischen einer zurückgezogenen Außerfunktionsposition und einer vorgerückten Eingriffsposition mit dem Zahnkranz 3 der Brennkraftmaschine 4 über ein Starterrelais 6 verstellt, das elektromagnetisch ausgebildet ist und bestrombare Relaiswicklungen 7 sowie einen Hubanker 8 umfasst, der bei Bestromung der Relaiswicklungen 7, die die Funktion einer Einzugswicklung hat, in diese axial hineingezogen wird. Der Hubanker 8 betätigt einen Einrückhebel 9, der eine Einspurfeder 13 beaufschlagt, die auf einem Mitnehmer 14 eines Rollenfreilaufs aufsitzt. Das Starterritzel 2 ist abtriebsseitig mit dem Mitnehmer 14 gekoppelt, so dass die axiale Vorschubbewegung des Mitnehmers 14 in die gewünschte axiale Stellbewegung des Starterritzels 2 zwischen der Außerfunktionsposition und der Eingriffsposition umgesetzt wird.

Die drehende Antriebsbewegung der Welle 5 bzw. des Starterritzels 2 wird mithilfe einer bevorzugten Ausgestaltung eines erfindungsgemäßen Startermotors 100 erzeugt, der eine elektrische Maschine 110 aufweist, beispielsweise einen permanenterregten Gleichstrommotor, die über ein Getriebe 120, beispielsweise ein Planetengetriebe mit der Welle 5 gekoppelt ist. Bei einer Betätigung des elektrischen Startermotors 100 wird die Welle 5 und damit auch das Starterritzel 2 in Drehung versetzt.

Zum Einschalten des Startermotors 100 ist ein Schaltrelais 11 vorgesehen, mittels welchem ein elektrischer Stromkreis der elektrischen Maschine 110 geschlossen werden kann.

Der Startvorrichtung 1 ist ferner z.B. ein Steuergerät 10 oder Zündschloss zugeordnet, über das die Funktionen des Starterrelais 6 und des Schaltrelais 11 gesteuert werden.

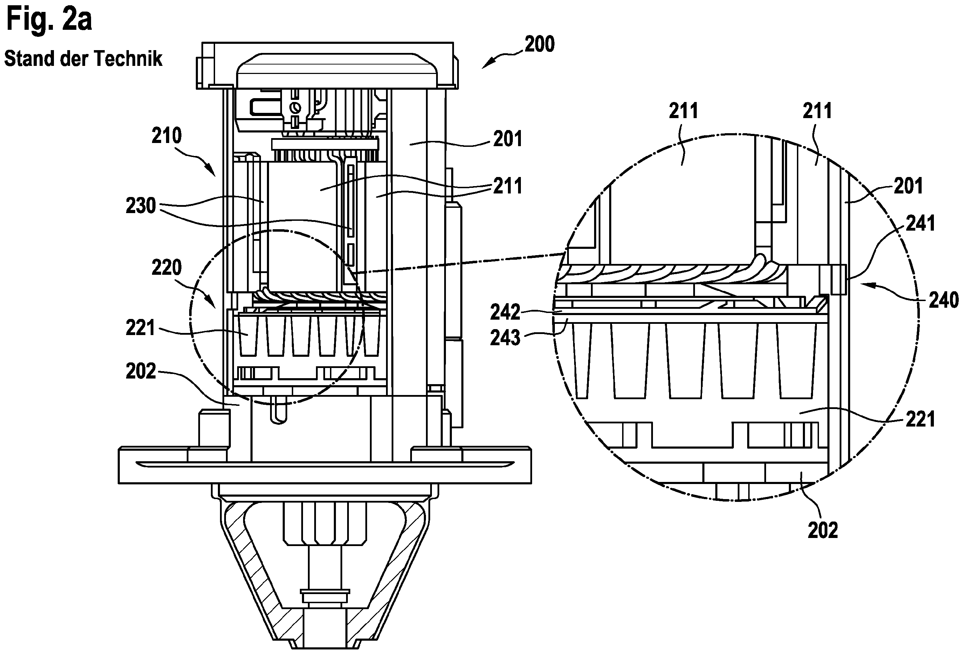

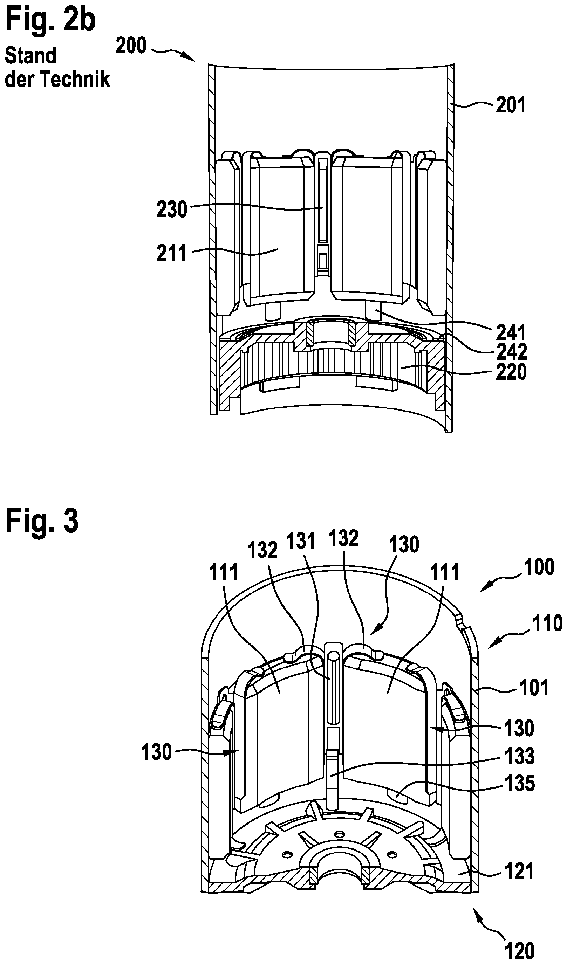

Figuren 2a und 2b zeigen jeweils schematisch einen nicht erfindungsgemäßen Startermotor 200 zum Starten einer Brennkraftmaschine.

Ein derartiger Startermotor 200 umfasst eine elektrische Maschine 210 mit Magnetelementen 211 in Form von Permanentmagneten und ein Getriebe 220 mit einem Getriebegehäuse 221.

Die elektrische Maschine 210 und das Getriebe 220 sind gemeinsam in einem Motorgehäuse 201 des Startermotors 200 angeordnet, welches durch ein Lagerschild 202 abgeschlossen wird.

Um die Magnetelemente 211 relativ zu dem Gehäuse 201 zu fixieren, sind Magnethalter 230 vorgesehen. Um das Getriebe 220 in dem Motorgehäuse 201 axial zu fixieren, ist ein Fixiermechanismus 240 vorgesehen. Dieser Fixiermechanismus 240 umfasst an der Innenseite des Motorgehäuses 201 vorgesehene Vorsprünge 241. Diese Vorsprünge 241 sind jedoch zu klein und gewährleisten nicht ausreichend Kontaktfläche für eine zuverlässige axiale Fixierung des Getriebes 220, da das aus Kunststoff gefertigte Getriebegehäuse 221 sonst bei zu großer Belastung beschädigt werden könnte. Daher umfasst der Fixiermechanismus 240 ein zusätzliches metallisches Halteelement 242 in Form eines metallischen Federrings zwischen dem Getriebe 220 und den Vorsprüngen 231. Dies sorgt gleichzeitig für einen nötigen Toleranzausgleich. Ferner ist zwischen dem Getriebegehäuse 221 und dem Halteelement 242 ein optionaler Gummiring 243 vorgesehen.

Die vorliegende Erfindung sieht nun vor, die Verwendung dieses separaten zusätzlichen Fixiermechanismus 240, insbesondere des metallischen Halteelements 242 zu vermeiden und dessen Funktion der axialen Fixierung des Getriebes auf die Magnethalter zum Fixieren der Permanentmagnete zu übertragen.

Figur 3 zeigt nun einen Ausschnitt eines Startermotors 100 gemäß einer ersten bevorzugten Ausgestaltung der Erfindung.

Der Startermotor 100 weist eine elektrische Maschine 110 beispielsweise in Form eines permanenterregten Gleichstrommotors und ein Getriebe 120, beispielsweise ein Planetengetriebe 120, auf, welche in einem gemeinsamen Motorgehäuse 101, beispielsweise in Form eines metallischen Zylinders angeordnet sind.

Die elektrische Maschine 110 weist Magnetelemente 111 in Form von Permanentmagneten auf. Es versteht sich, dass die elektrische Maschine 110 noch weitere Komponenten aufweist wie einen Rotor, eine Welle usw., welche aus Gründen der Übersichtlichkeit in Figur 3 nicht dargestellt sind.

Fixierelemente 130 sind zum Fixieren der Magnetelemente 111 vorgesehen, insbesondere zum Fixieren der Magnetelemente 111 relativ zu dem Motorgehäuse 101 in axialer Richtung und in Umfangsrichtung.

Die Fixierelemente 130 sind ferner zum axialen Fixieren des Getriebes 120 vorgesehen. Zu diesem Zweck üben die Fixierelemente 130 jeweils eine axiale Kraft auf die Magnetelemente 111 und ferner auf das Getriebe 120 aus, insbesondere auf ein Gehäuse 121 des Getriebes 120.

Die in Figur 3 gezeigten Fixierelemente 130 weisen jeweils einen ersten Abschnitt 131 zwischen zwei in Umfangsrichtung betrachtet benachbarten Magnetelementen 111 auf. Dieser erste Abschnitt 131 verläuft zumindest im Wesentlichen in axialer Richtung und ist als ein Trägerabschnitt ausgebildet, mittels welchem das Fixierelement 130 an dem Gehäuse 101 des Startermotors 100 befestigt ist.

An den ersten Abschnitt 131 schließt sich ein zweiter Abschnitt 132 an, der auf einer dem Getriebe 120 abgewandten Seite der benachbarten Magnetelemente 111 verläuft und dort eine axiale Kraft auf die benachbarten Magnetelemente 111 ausübt. Dieser zweite Abschnitt 132 ist zweckmäßigerweise als gebogener Federabschnitt ausgebildet. Durch diese axiale Kraft werden die Magnetelemente 111 gegen einen Vorsprung 135 in dem Gehäuse 101 des Startermotors 100 gedrückt und fixiert.

Ferner schließt sich an den ersten Abschnitt 131 ein dritter Abschnitt 133 an, der von einer dem Getriebe 120 zugewandten Seite der benachbarten Magnetelemente 111 bis zu einer den Magnetelementen 111 zugewandten Seite des Getriebes 120 verläuft und dort eine axiale Kraft auf das Getriebe 120 ausübt. Auch dieser dritte Abschnitt 133 ist zweckmäßigerweise als gebogener Federabschnitt ausgebildet. Durch diese axiale Kraft wird das Getriebe 120 gegen ein Lagerschild des Startermotors 100 gedrückt und axial fixiert. Die auf das Getriebe 120 ausgeübte axiale Kraft weist in dieselbe Richtung wie die auf die Magnetelemente 111 ausgeübte axiale Kraft, nämlich in Richtung des Lagerschilds bzw. Starterritzels.

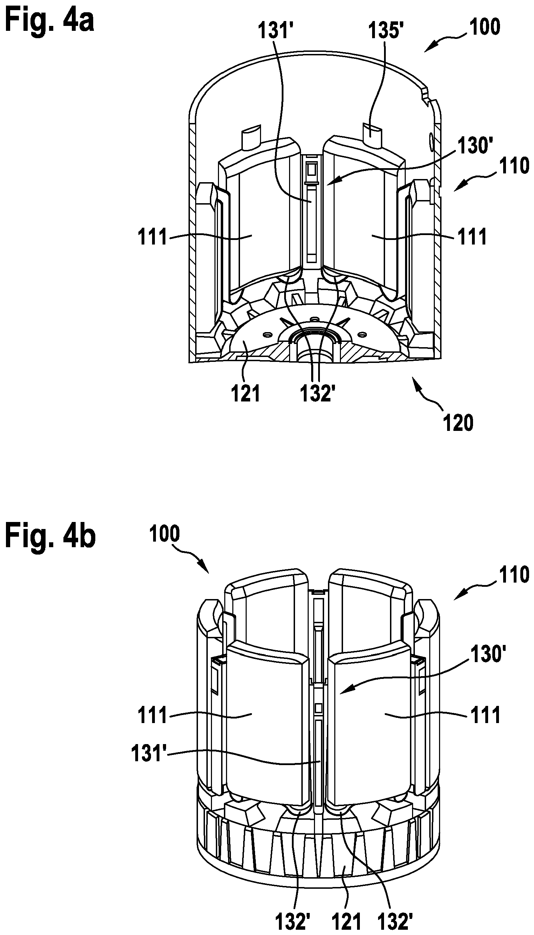

Figuren 4a und 4b zeigen einen Ausschnitt eines Startermotors 100 gemäß einer zweiten bevorzugten Ausgestaltung der Erfindung.

Im Gegensatz zu der in Figur 3 gezeigten Ausgestaltung üben die Fixierelemente 130' gemäß der in Figur 4a und 4b gezeigten Ausgestaltung keine axiale Kraft auf die dem Getriebe 120 abgewandten Seiten der Magnetelemente 111 aus.

Die Fixierelemente 130' weisen analog zu den Fixierelementen 130 jeweils einen ersten Abschnitt 131' auf, der zwischen zwei in Umfangsrichtung betrachtet benachbarten Magnetelementen 111 zumindest im Wesentlichen in axialer Richtung verläuft und insbesondere als Trägerabschnitt ausgebildet ist, mittels welchem die Fixierelemente 130' an dem Gehäuse 101 befestigt sind.

An diesen ersten Abschnitt 131' der Fixierelemente 130' schließt sich ein zweiter Abschnitt 132' an, der in einem Bereich zwischen der dem Getriebe 120 zugewandten Seite der zwei benachbarten Magnetelemente 111 und der den Magnetelementen 111 zugewandten Seite des Getriebes 120 verläuft. In diesem Bereich übt das Fixierelement 130' eine axiale Kraft auf das Getriebe 120 und auf die benachbarten Magnetelemente 111 aus.

Zu diesem Zweck ist der zweite Abschnitt 132' als gebogener Federabschnitt ausgebildet, der zunächst von dem ersten Abschnitt 131' ausgehend bzw. von der dem Getriebe 120 zugewandten Seite der benachbarten Magnetelemente 111 bis zu der den Magnetelementen 111 zugewandten Seite des Getriebes 120 verläuft und dort die axiale Kraft auf das Getriebe 120 ausübt. Von dort aus verläuft der zweite Abschnitt 132' zurück bis zu der dem Getriebe 120 zugewandten Seite der zwei benachbarten Magnetelemente 111 und übt dort die axiale Kraft auf die zwei benachbarten Magnetelemente 111 aus.

Durch diese axialen Kräfte werden die Magnetelemente 111 gegen einen Gehäusevorsprung 135' gedrückt und fixiert und das Getriebe 120 wird gegen das Lagerschild des Startermotors 100 gedrückt und somit axial fixiert. Die auf das Getriebe 120 ausgeübte axiale Kraft weist in die entgegengesetzte Richtung wie die auf die Magnetelemente 111 ausgeübte axiale Kraft.

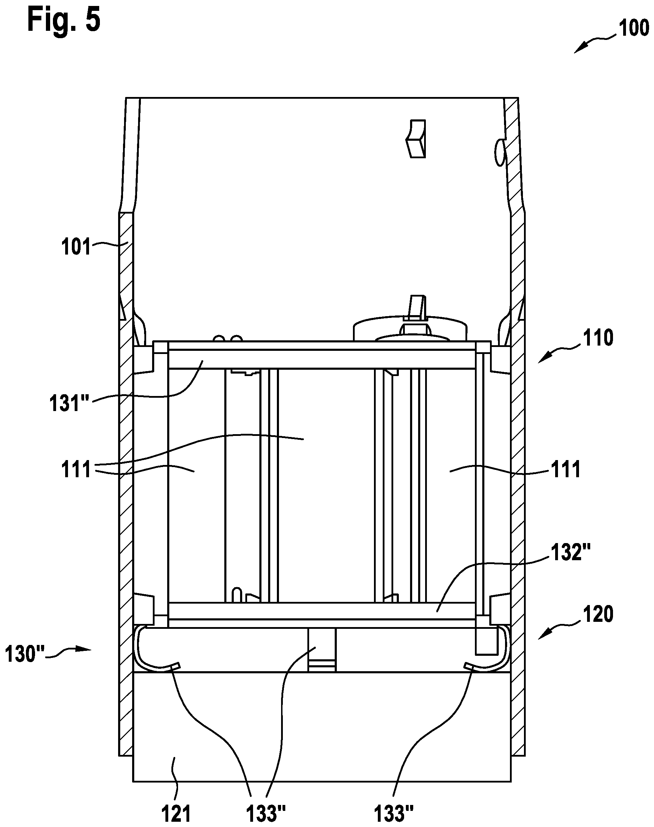

Figur 5 zeigt einen Ausschnitt eines Startermotors 100 gemäß einer dritten bevorzugten Ausgestaltung der Erfindung.

Das Fixierelement 130" weist im Beispiel von Figur 5 ein ringförmiges Element 132" auf, das an der dem Getriebe 120 zugewandten Seite der Magnetelemente 111 verläuft.

Zusätzlich ist auch noch ein zweites ringförmiges Element 131" vorgesehen, das an der dem Getriebe 120 abgewandten Seite der Magnetelemente 111 verläuft.

Die ringförmigen Elemente 131" und 132" üben jeweils insbesondere eine axiale Kraft auf die Magnetelemente 111 aus, so dass die Magnetelemente 111 zweckmäßigerweise zwischen diesen Elementen 131" und 132" eingeklemmt bzw. eingespannt sind.

Von dem ringförmigen Element 131" verlaufen Verlängerungsabschnitte 133" bis zu der den Magnetelementen 111 zugewandten Seite des Getriebes 120 und üben dort eine axiale Kraft auf das Getriebe 120 aus, um dieses gegen das Lagerschild des Startermotors 100 zu drücken und zu somit zu fixieren. Die von dem Fixierelement 130" auf das Getriebe 120 ausgeübte axiale Kraft weist in die entgegengesetzte Richtung wie die auf die Magnetelemente 111 ausgeübte axiale Kraft.

Im Rahmen der Erfindung werden somit unterschiedliche Ausführungsformen für Fixierelemente vorgeschlagen, die neben den Magnetelementen ferner das Getriebe axial in wenigstens eine Richtung fixieren bzw. einen Anschlag in wenigstens eine axiale Richtung dafür darstellen.

## Patentansprüche

1. Startermotor (100) für eine Startvorrichtung (1) zum Starten einer Brennkraftmaschine mit einer elektrischen Maschine (110) mit einem Motorgehäuse (101) und einem Getriebe (120), wobei in dem Motorgehäuse (101) wenigstens ein Fixierelement (130, 130', 130") zum Fixieren wenigstens eines Magnetelements (111) der elektrischen Maschine (110) vorgesehen ist, wobei das wenigstens eine Fixierelement (130, 130', 130") ferner das Getriebe (120) axial fixiert.

2. Startermotor nach Anspruch 1, wobei das wenigstens eine Fixierelement (130, 130', 130") eine axiale Kraft auf das wenigstens eine Magnetelement (111) ausübt und ferner eine axiale Kraft auf das Getriebe (120).

3. Startermotor nach Anspruch 2, wobei das wenigstens eine Fixierelement (130, 130', 130") die axiale Kraft auf das wenigstens eine Magnetelement (111) in dieselbe Richtung ausübt wie die axiale Kraft auf das Getriebe (120).

4. Startermotor nach Anspruch 1, 2 oder 3,
wobei ein erster Abschnitt (131) des wenigstens einen Fixierelements (130) zwischen zwei in Umfangsrichtung betrachtet benachbarten Magnetelementen (111) zumindest im Wesentlichen in axialer Richtung verläuft,
wobei ein sich an den ersten Abschnitt (131) anschließender zweiter Abschnitt (132) des wenigstens einen Fixierelements (130) auf einer dem Getriebe (120) abgewandten Seite der zwei benachbarten Magnetelemente (111) verläuft und dort eine axiale Kraft auf die zwei benachbarten Magnetelemente (111) ausübt und
wobei ein sich an den ersten Abschnitt (131) anschließender dritter Abschnitt (133) des wenigstens einen Fixierelements (130) von einer dem Getriebe (120) zugewandten Seite der zwei benachbarten Magnetelemente (111) bis zu einer den Magnetelementen (111) zugewandten Seite des Getriebes (120) verläuft und dort eine axiale Kraft auf das Getriebe (120) ausübt.

5. Startermotor nach Anspruch 4,
wobei der erste Abschnitt (131) als ein Trägerabschnitt ausgebildet ist, mittels welchem das wenigstens eine Fixierelement (130) an dem Motorgehäuse (101) des Startermotors (100) befestigt ist,
wobei der zweite Abschnitt (131) als ein sich an den ersten Abschnitt (131) anschließender gebogener Federabschnitt ausgebildet ist und
wobei der dritte Abschnitt (133) als ein sich an den ersten Abschnitt (131) anschließender gebogener Federabschnitt ausgebildet ist.

6. Startermotor nach Anspruch 1 oder 2,
wobei ein erster Abschnitt (131') des wenigstens einen Fixierelements (130') zwischen zwei in Umfangsrichtung betrachtet benachbarten Magnetelementen (111) zumindest im Wesentlichen in axialer Richtung verläuft,
wobei ein sich an den ersten Abschnitt (131') anschließender zweiter Abschnitt (132') des wenigstens einen Fixierelements (130') in einem Bereich zwischen einer dem Getriebe (120) zugewandten Seite der zwei benachbarten Magnetelemente (111) und einer den Magnetelementen (111) zugewandten Seite des Getriebes (120) verläuft und dort eine axiale Kraft auf das Getriebe (120) und eine axiale Kraft auf die zwei benachbarten Magnetelemente (111) ausübt.

7. Startermotor nach Anspruch 6,
wobei der zweite Abschnitt (132') des wenigstens einen Fixierelements (130') zunächst von der dem Getriebe (120) zugewandten Seite der zwei benachbarten Magnetelemente (111) bis zu der den Magnetelementen (111) zugewandten Seite des Getriebes (120) verläuft und dort die axiale Kraft auf das Getriebe (120) ausübt und
wobei der zweite Abschnitt (132') von der den Magnetelementen (111) zugewandten Seite des Getriebes (120) bis zu der dem Getriebe (120) zugewandten Seite der zwei benachbarten Magnetelemente (111) verläuft und dort die axiale Kraft auf die zwei benachbarten Magnetelemente (111) ausübt.

8. Startermotor nach Anspruch 6 oder 7,
wobei der erste Abschnitt (131') als ein Trägerabschnitt ausgebildet ist, mittels welchem das wenigstens eine Fixierelement (130') an dem Motorgehäuse (101) des Startermotors (100) befestigt ist und
wobei der zweite Abschnitt (132') als ein sich an den ersten Abschnitt (131') anschließender gebogener Federabschnitt ausgebildet ist.

9. Startermotor nach Anspruch 1 oder 2,
wobei das wenigstens eine Fixierelement (130") ein ringförmiges Element (132") aufweist, das an einer dem Getriebe (120) zugewandten Seite des wenigstens einen Magnetelements (111) verläuft und
wobei sich von dem ringförmigen Element (132") wenigstens ein Verlängerungsabschnitt (133") bis zu einer den Magnetelementen (111) zugewandten Seite des Getriebes (120') erstreckt und dort eine axiale Kraft auf das Getriebe (120) ausübt.

10. Startermotor nach einem der vorstehenden Ansprüche, wobei das Getriebe (120) durch das wenigstens eine Fixierelement (130, 130', 130") gegen ein Begrenzungselement gedrückt wird, insbesondere gegen ein Lagerschild des Startermotors (100).

11. Startermotor nach einem der vorstehenden Ansprüche, wobei das Getriebe (120) ferner durch das wenigstens eine Fixierelement (130, 130', 130") zusammengehalten wird.

12. Startvorrichtung (1) zum Starten einer Brennkraftmaschine mit einem Startermotor (100) nach einem der vorstehenden Ansprüche.
